# EUROPEAN PATENT APPLICATION

(11) **EP 1 853 063 A1**
(43) Date of publication of application: **07.11.2007**
(21) Application number: 06113516.6
(22) Date of filing: 04.05.2006
(51) Int. Cl.: H04N 5/64, H01R 13/453

(54) **Television signals receiving device for computer**

(71) Applicant: Twinhan Technology Co., Ltd., Hsi-Chih 221 Taipei Hsien (TW)
(72) Inventor: Liu, Nick, 13 F-6, Taipei Hsien (TW)
(74) Representative: Viering, Jentschura & Partner

(57) **Abstract**

A television signals receiving device for a computer comprises a main body and a movable portion. The main body has a socket and an insertion portion. A second rail of the movable portion moves relative to a first rail of the main body and a second stopping portion of the movable portion stops a first stopping portion of the main body with each other, so that the movable portion can selectively cover or uncover the insertion portion.

## Description

### BACKGROUND OF THE INVENTION

### 1. Field of the Invention

The present invention relates to a receiving device, and in particular to a receiving device for receiving the television signals for a computer.

### 2. Description of Prior Art

The digital television is a television system capable of converting the television signals from "analog signals" into "digital signals", providing a digital technology process and broadcasting after compression. After a television set receives the processed signals, those signals will be decoded and displayed on the television screen. Therefore, briefly, the signals of the digital television are generated by means of sampling, quantifying, decoding and converting the analog signals into the digital signals.

Another feature of the digital television lies in the fact that the digital signals are compressed so as to avoid from occupying too large frequency band. The international standard of the data compression and digitalization is MPEG-2. After the digital signals are compressed by means of MPEG-2, digital transmission technologies (such as some modulation technologies, e.g. QPSK QAM VSB or OFDM) can be additionally adopted to transmit more data within the limited frequency band, causing the doubling of the using ratio of the frequency band. Since the signals are proceeded by means of digitalization, other data can be added in the signals so as to increase the contents of the television programs or provide new services that the original analog television cannot offer, such as subtitles in various kinds of languages, screen with different view angles, introductory information about actors, statistic data of games or the like. Broadcast system providers can also transmit news, computer programs, information about the stock market, materials of interactive teaching or the like to the customers by means of digital information.

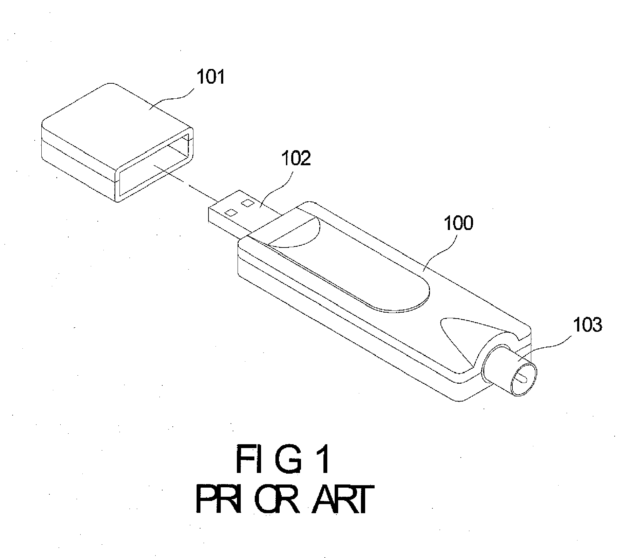

With reference to Fig. 1, it shows a digital television signals receiving device in prior art. Such device comprises a housing 100 and a cover body 101. One end of the housing 100 is provided with a USB (Universal Series Bus) connector 102. The other end of the housing 100 is provided with a socket 103. The cover body 101 is used to cover the USB connector 102. However, when using the conventional device, it is necessary for the user to remove the cover body 101 and then use the USB connector 102, which results in the inconvenience for using.

Further, after the user removes the cover body 101, he/she may forget to put on the cover body 101 back: At this time, the USB connector 102 is uncovered and thus easy to get damaged.

Therefore, according to the above, in practical use, the digital television signals receiving device of prior art still has some problems and needs to be improved.

In view of the above, the inventor proposes the present invention to overcome the above problems based on his expert experiences and deliberate researches.

### SUMMARY OF THE INVENTION

The primary object of the present invention is to provide a television signals receiving device for a computer, in which a second rail of a movable portion moves relative to a first rail of a main body and a second stopping portion of the movable portion stops a first stopping portion of the main body with each other, so that the movable portion can selectively cover or uncover an insertion portion (USB connector).

In order to achieve the above objects, the present invention provides a television signals receiving device for a computer, which comprises: a main body having a socket and an insertion portion, and a movable portion movably connected to the main body for selectively covering or uncovering the insertion portion.

In order to further understand the technique, means and functions employed by the present invention for achieving the desired objects, a detailed description relating to the present invention will be made with reference to the accompanying drawings so as to clearly explain the characteristics and the technical contents of the present invention. However, it should be understood that the drawings are illustrative but not used to limit the scope of the present invention.

### BRIEF DESCRIPTION OF THE DRAWINGS

Fig. 1 is a perspective view showing a digital television signals receiving device of prior art;
Fig. 2 is an exploded perspective view showing the television signals receiving device for a computer in accordance with the present invention;
Fig. 3 is an exploded perspective view showing the television signals receiving device for a computer in accordance with another embodiment of the present invention;
Fig. 4 is a perspective view (I) showing the television signals receiving device for a computer in accordance with the present invention;
Fig. 5 is a perspective view (II) showing the television signals receiving device for a computer in accordance with the present invention; and
Fig. 6 is a perspective view showing a state in which the television signals receiving device for a computer in accordance with the present invention is in use.

### DETAILED DESCRIPTION OF THE INVENTION

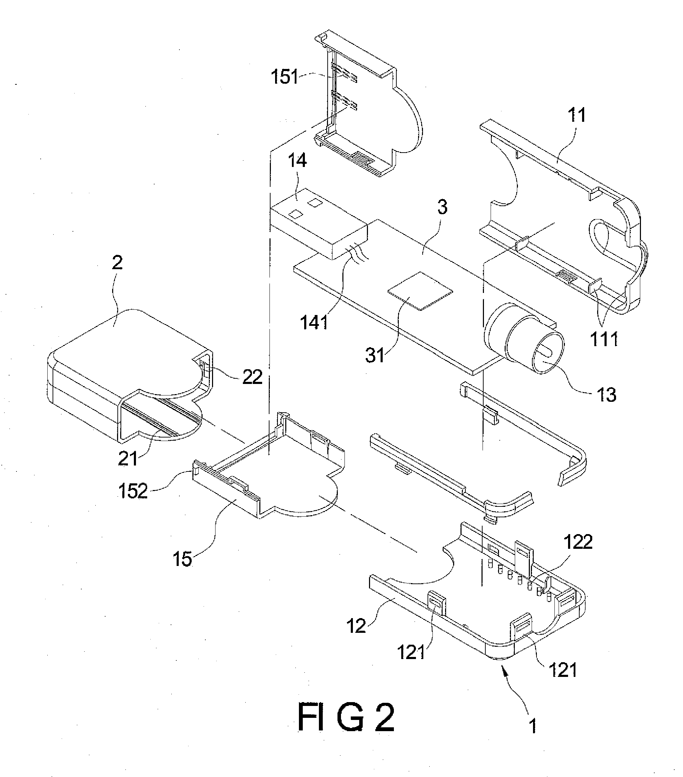

With reference to Figs. 2 to 5, the present invention provides a television signals receiving device for a computer, which comprises a main body 1 and a movable portion 2. The main body 1 has a socket 13 and an insertion portion 14. The movable portion 2 is movably connected to the main body 1 so as to selectively cover or uncover the insertion portion 14.

The main body 1 is formed into a rectangular shape and also can be other suitable shapes. The main body 1 comprises an upper casing 11 and a lower casing 12. The interior of the upper casing 11 is provided with a plurality of fixing portions 111. The interior of the lower casing 12 is provided with a plurality of engaging portions 121 for engaging with the fixing portions of the upper casing 11, thereby to connect the upper casing 11 and the lower casing 12 to form the main body 1. The surface of the lower casing 12 is formed with a plurality of heat-dissipating holes 122 for dissipating the heat generated by the main body 1. The main body 1 further comprises a circuit board 3 provided in the main body 3 for electrically connecting to the socket 13.

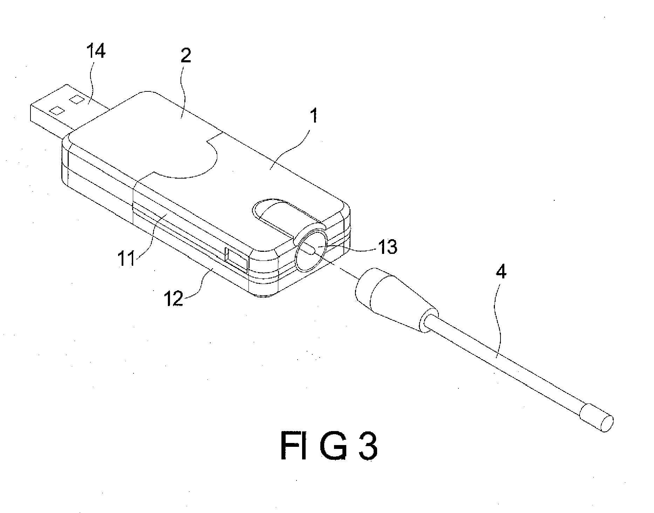

The socket 13 is provided at one end of the main body 1 and further comprises an antenna 4 for inserting into the socket 13 (as shown in Fig. 3). The circuit board 3 is used to receive the television signals for a computer. Further, an impedance matching portion 31 is provided between the circuit board 3 and the socket 13, so that the main body 1 can still maintain a better quality in receiving signals even when the antenna 4 is directly connected to the socket 13. A signal line 141 is provided to extend from the insertion portion 14 for electrically connecting to the circuit board 3. In the present embodiment, the insertion portion 14 is a USB (Universal Series Bus) connector.

The other end of the main body 1 is provided with a connecting portion 15. The outside of the upper and lower ends of the connecting portion 15 is each provided with a first rail 151. Each of both sides of the connecting portion 15 is provided with a first stopping portion 152. The connecting portion 15 is connected to the insertion portion 14. The inside of the upper and lower ends of the movable portion 2 is each provided with a second rail 21 for corresponding to the first rail 151. Each of both sides of the movable portion 2 is provided with a second stopping portion 22 for corresponding to the first stopping portion 152.

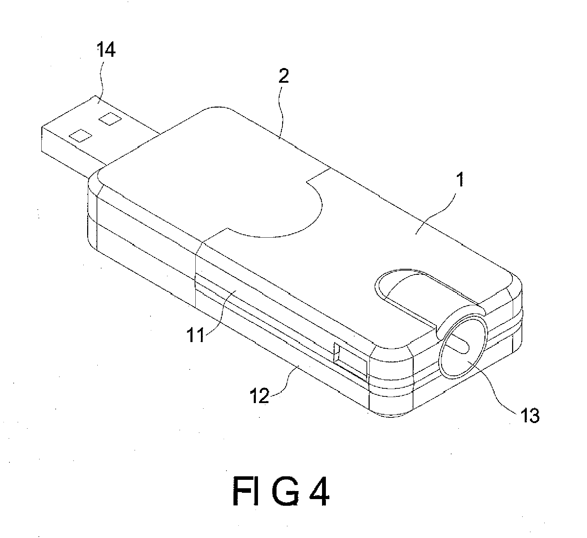

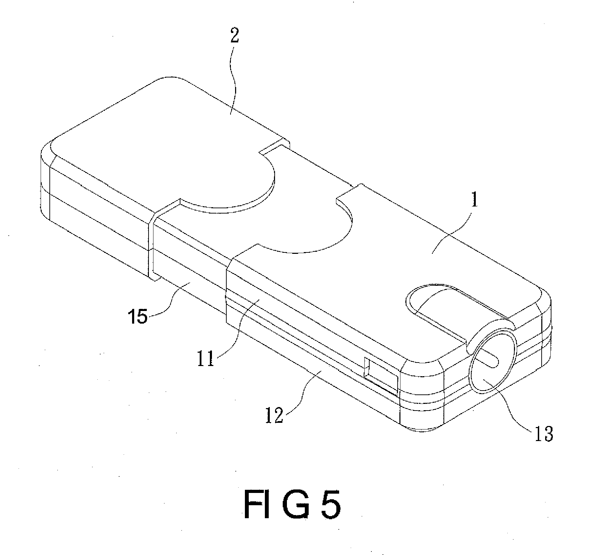

When the second rail 21 of the movable portion 2 moves downwardly relative to the first rail 151 of the connecting portion 15, the second stopping portion 22 of the movable portion 2 will stop the first stopping portion 152 of the connecting portion 15 with each other. At this time, the insertion portion 14 is exposed to the outside and thus the user can directly use the insertion portion 14 (as shown in Fig. 4). On the contrary, when the second rail 21 of the movable portion 2 moves upwardly relative to the first rail 151 of the connecting portion 15, the second stopping portion 22 of the movable portion 2 will stop the first stopping portion 152 of the connecting portion 15 with each other. At this time, the insertion portion is hidden in the movable portion 2, so that the insertion portion 14 is prevented from damage (as shown in Fig. 5).

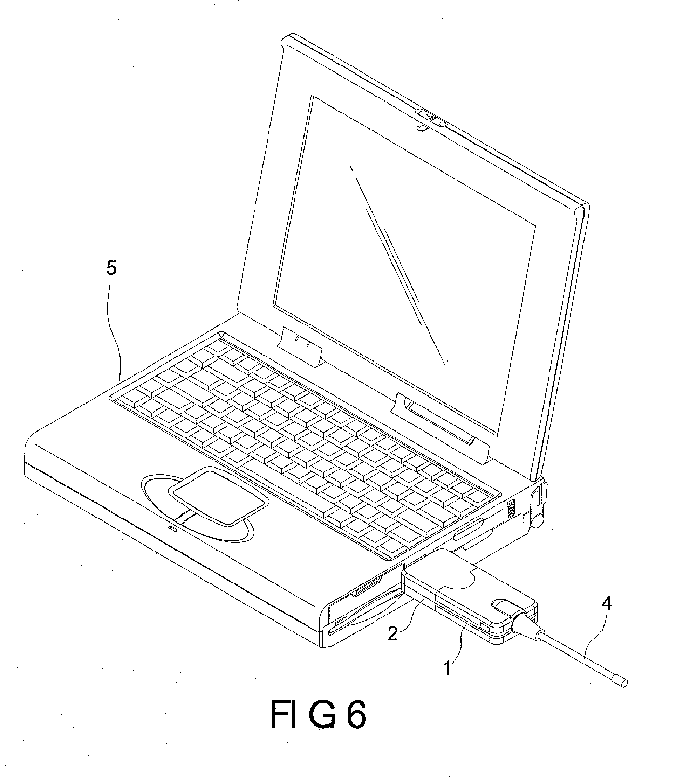

With reference to Fig. 6, in the present embodiment, when the television signals receiving device for a computer is in use, it is connected to a notebook via the insertion portion 14 while the television signals receiving device for a computer itself is connected with the antenna 4.

The present invention provides a television signals receiving device for a computer, in which the second rail 21 of the movable portion 2 moves relative to the first rail 151 of the main body 1 and the second stopping portion 22 of the movable portion 2 stops the first stopping portion 152 of the main body 1 with each other, so that the movable portion 2 can selectively cover or uncover the insertion portion 14 (USB connector).

According to the above, the television signals receiving device for a computer in accordance with the present invention has the advantages as follows.
1. The movable can selectively cover or uncover the insertion portion 14 (USB connector) and the movable portion 2 is connected onto the main body 1, so that in use, the user need not to entirely remove the movable portion 2. Therefore, it is very convenient to use the device.
2. The connection between the antenna 4 and the television signals receiving device for a computer is not via feedback lines. Instead, the antenna can be directly connected to the television signals receiving device for a computer. Therefore, the user only needs to carry fewer elements.

Although the present invention has been described with reference to the foregoing preferred embodiment, it will be understood that the invention is not limited to the details thereof. Various equivalent variations and modifications can still be occurred to those skilled in this art in view of the teachings of the present invention. Thus, all such variations and equivalent modifications are also embraced within the scope of the invention as defined in the appended claims.

## Claims

1. A television signals receiving device for a computer, comprising:
a main body having a socket and an insertion portion; and
a movable portion movably connected to the main body for selectively cover or uncover the insertion portion.

2. The television signals receiving device for a computer according to claim 1, wherein the main body comprises an upper casing and a lower casing.

3. The television signals receiving device for a computer according to claim 2, wherein the upper casing is provided with a plurality of fixing portions.

4. The television signals receiving device for a computer according to claim 3, wherein the lower casing is provided with a plurality of engaging portions for engaging with the fixing portions of the upper casing.

5. The television signals receiving device for a computer according to claim 1, further comprising an antenna for connecting to the socket.

6. The television signals receiving device for a computer according to claim 1, wherein the other end of the main body is provided with a connecting portion, the connecting portion is provided with a first rail thereon, each of both sides of the connecting portion is provided with a first stopping portion, and the connecting portion is connected to the insertion portion.

7. The television signals receiving device for a computer according to claim 6, wherein the movable portion is provided with a second rail for corresponding to the first rail.

8. The television signals receiving device for a computer according to claim 6, wherein each of both sides of the movable portion is provided with a second stopping portion for corresponding to the first stopping portion.

9. The television signals receiving device for a computer according to claim 1, wherein the insertion portion is a USB (Universal Series Bus) connector.

10. The television signals receiving device for a computer according to claim 1, further comprising a circuit board provided in the main body for electrically connecting to the socket.
